# EUROPÄISCHE PATENTANMELDUNG

(11) **EP 2 020 180 A1**
(43) Veröffentlichungstag der Anmeldung: **04.02.2009**
(21) Anmeldenummer: 08009115.0
(22) Anmeldetag: 16.05.2008
(51) Int. Cl.: A01N 59/00, A01N 37/16, A01N 37/10, A01N 37/02, A01N 37/36, A01N 25/30, A01N 25/02, A01N 25/00, A01P 1/00, B41N 3/08

(54) **Feuchtmittel und dessen Verwendung in Druckanlagen**

(30) Priorität: 02.08.2007 EP 07015174
(71) Anmelder: WESSO AG, 91217 Hersbruck (DE)
(72) Erfinder: Kimmel, Stefan, 90409 Nürnberg (DE)
(74) Vertreter: LOUIS, PÖHLAU, LOHRENTZ

(57) **Zusammenfassung**

Die Erfindung betrifft ein Feuchtmittel bzw. Feuchtwasser sowie ein Desinfektionsmittel für den Einsatz in Druckanlagen, insbesondere beim Flachdruck oder Offsetdruck.

## Beschreibung

Die Erfindung betrifft ein Feuchtmittel bzw. Feuchtwasser sowie ein Desinfektionsmittel für den Einsatz in Druckanlagen, insbesondere beim Flachdruck oder Offsetdruck.

Beim Offsetdruck werden Metallplatten mit hydrophilen und hydrophoben Bereichen bereitgestellt, wobei die hydrophoben Bereiche mit einer oleofinen Schicht versehen sind und den bildgebenden Bereichen entsprechen. Auf diese Metallplatten wird ein Feuchtwasser aufgebracht, welches die hydrophilen Bereiche der Metallplatte feucht hält bzw. hydrophil hält. Danach wird eine hydrophobe Druckfarbe auf die Metallplatten aufgebracht. Die hydrophobe Druckfarbe haftet nur an den hydrophoben, bildgebenden Bereichen der Metallplatte. Die Farbe wird anschließend direkt auf ein Aufnahmematerial übertragen (Flachdruck) oder geht auf ein Offsettuch aus Gummi oder Kunststoff über, welches die Farbe dann auf das endgültige Aufnahmematerial überträgt (Offsetdruck). Dem Feuchtwasser wird zur Verbesserung des Druckergebnisses ein Feuchtmittel zugegeben, um z.B. die Viskosität und den pH-Wert zu verändern und die Verträglichkeit mit der Druckfarbe auf Ölbasis zu gewährleisten. Zur Konservierung des Feuchtmittels werden häufig umweltschädliche Verbindungen wie Isothiazoline, Bronopol und/oder Triazole eingesetzt.

Im Druck, insbesondere Offset-Druck, stellt die Reduzierung der Keimzahl im Feuchtwasser und die Hemmung des Wachstums von Biofilmen in den Druckanlagen eine besondere Herausforderung dar. Fragmente von Biofilmen, die aus Kolonien von Bakterien und/oder Pilzen und aus der von den Mikroorganismen abgeschiedenen extrazellulären Substanz bestehen, können die Zirkulation des Feuchtwassers durch Verlegen der Befeuchterdüsen beeinträchtigen und dadurch die Druckqualität beeinträchtigen.

Es ist Aufgabe der vorliegenden Erfindung, ein Feuchtmittel zur Herabsetzung der Keimzahl und zur Verringerung von Biofilmen bereitzustellen, das das Wachstum von Bakterien, die Bildung von Biofilmen verringert, verhindert und/oder sogar zum Abbau der Biofilme führt.

Die Aufgabe wird durch ein Feuchtmittel gelöst, welches mindestens eine Peroxidverbindung umfasst.

Überraschenderweise sind Peroxidverbindungen hervorragend geeignet, in Druckanlagen das Wachstum von Bakterien und die Bildung von Biofilmen zu verringern, verhindern und/oder sogar Biofilme abzubauen. Biofilme können aus Kolonien von Bakterien, von Pilzen und/oder aus der von diesen Mikroorganismen abgeschiedenen extrazellulären Substanzen bestehen. Korrosion stellt in Druckanlagen ein grundlegendes Problem dar. Überraschenderweise führt jedoch die Zugabe von Peroxidverbindungen in niedriger Dosierung in Feuchtmitteln zu keiner verstärkten Korrosion.

Ferner ist das erfindungsgemäße Feuchtmittel vorzugsweise auch geeignet, Kalkablagerungen auf Druckwalzen zu verringern und/oder zu verhindern. Insoweit wird auch die Bildung von Biofilmen reduziert, da sich auf und/oder an den Kalkablagerungen besonders bevorzugt Biofilme bilden.

Unter einem Feuchtmittel im Sinne der vorliegenden Erfindung sind Zusammensetzungen zu verstehen, die dem Feuchtwasser beim Druckprozess zugesetzt werden, um das Drucken zu erleichtern und/oder um die Qualität der Druckerzeugnisse zu erhöhen. Unter Feuchtwasser im Sinne der Erfindung ist vorzugsweise eine wässerige Lösung und/oder Suspension zu verstehen, die beim Druckprozess die Druckzylinder feucht hält, das Drucken erleichtert und/oder die Qualität der Druckerzeugnisse erhöht. Das Feuchtmittel im Feuchtwasser hält die bildfreien Bereiche auf dem Druckzylinder hydrophil, so dass die Farbe nur von den hydrophoben Bildstellen angenommen wird. Vorzugsweise verhindert das Feuchtmittel ein Tonen, d.h. dass die Farbe auch von den bildfreien Bereichen angenommen wird.

Bei einer Ausführungsform des erfindungsgemäßen Feuchtmittels ist die Peroxidverbindung aus der Gruppe, bestehend aus Alkaliperoxiden, Erdalkaliperoxiden, Wasserstoffperoxid, Peroxysäuren, Perboraten, Perphosphaten, Persilikaten, Persulfaten, Percarbonaten und/oder Mischungen davon ausgewählt.

Beispielsweise sind Kaliumperoxymonosulfat, Kaliumperoxydisulfat, Kaliumperoxoborat, Natriumperoxoborat, Carbamidperoxid oder Mischungen davon geeignet. Bei einer Ausführungsform wird Wasserstoffperoxid eingesetzt. Vorzugsweise ist das Wasserstoffperoxid nur zu einem geringen Grad stabilisiert. Vorzugsweise enthält das Wasserstoffperoxid weniger als 7 mmol/l freie Säure, insbesondere Phosphorsäure, und/oder andere Stabilisatoren, bezogen auf das Gesamtgewicht des Wasserstoffperoxids bzw. der Wasserstoffperoxidlösung.

Bei einer Ausführungsform des erfindungsgemäßen Feuchtmittels umfasst das Feuchtmittel mindestens eine Peroxidverbindung in einer Konzentration von weniger als 1,5 Gew. %, bezogen auf das Gesamtgewicht des Feuchtmittels. Vorzugsweise umfasst das Feuchtmittel die Peroxidverbindung in einer Konzentration von 1,5 bis 0,1 Gew.-%, weiter bevorzugt in einer Konzentration von 0,2 bis 1,0 Gew.-%, bezogen auf das Gesamtgewicht des Feuchtmittels.

Feuchtmittel umfassen vorzugsweise ferner Tenside und/oder Puffer. Die Tenside setzen vorzugsweise die Oberflächenspannung des Feuchtwassers herab. Die Puffer stabilisieren vorzugsweise den pH-Wert.

Bei einer Ausführungsform des erfindungsgemäßen Feuchtmittels umfasst das Feuchtmittel mindestens ein Tensid, ausgewählt aus der Gruppe, bestehend aus kationischen, anionischen, nichtionischen und/oder amphoteren Tensiden.

Vorzugsweise ist das mindestens eine Tensid aus der Gruppe ausgewählt, bestehend aus Alkylglucosiden, quarternären Ammoniumverbindungen, Aminosäurederivaten mit Tensid-Wirkung, Alkanolamiden, Alkanolaminen, Alkalisalzen von Fettsäuren, Glykolen, insbesondere Glykolethern, Tertiäracetylenglykolen, Fettsäureestern, insbesondere Sorbitanfettsäureestern, Fettsäureethoxylaten, Alkylphosphonaten, Ethylenoxid-Polymeren, Propylenoxid-Polymeren, Ethylenoxid/Propylenoxid-Copolymeren, Fettalkoholethoxylaten, Siloxanalkoxylaten und Mischungen davon.

Als Tenside können beispielsweise Propylenglykol, Ethylenglykol, Neopenthylglykol, 3,5-Dimethyl-1-hexin-3-ol, 3,6-Dimethyl-4-octin-3,5-diol, 2,4,7,9-Tetramethyl-5-decin-4,7-diol, Butandiol, Hexandiol, 2-Ethyl-1,3-hexandiol, epoxylierte Alkohole, Acetylenglykole, und/oder Alkylphenole eingesetzt werden. Als nicht-ionische schaumarme Tenside sind beispielsweise Ethylenoxid/Propylenoxid-Copolymere, Fettalkoholethoxylate, Fettsäureethoxylate und/oder Tertiäracetylenglykol (Handelsname: Surfynol, Disponil LS 2, Merlosol) geeignet.

Besonders bevorzugte Tenside sind Alkylglukoside, welche auch als Zuckertenside bezeichnet werden können, quarternäre Ammoniumverbindungen und/oder nicht-ionische schaumarme Tenside. Beispielsweise können auch polymere quarternäre Ammoniumverbindungen eingesetzt werden.

Als Zuckertenside sind beispielsweise Alkyl(C₈-C₁₂)(poly)glukoside und/oder Alkyl(C₈-C₁₂)maltoside geeignet. Beispielsweise können Octylpolyglukoside, Decylpolyglukoside, Undecylpolyglukoside, Butylpolyglukoside eingesetzt werden.

Als quaternäre Ammoniumverbindungen können beispielweise Didecyldimethylammoniumchlorid, Cetyltrimethylammoniumchlorid, Benzalkoniumchlorid, insbesondere N-Alkyl(C₁₂-C₁₈)-N-benzyl-N,N-dimethyl-ammoniumchlorid, polymere quaternäre Ammoniumverbindungen und/oder ethoxylierte quaternäre Ammoniumverbindungen eingesetzt werden.

Als Alkalisalze von Fettsäuren sind z. B. Natriumpalmitat, Natriumoleat, Natriummyristat, Natriumstearat, Kaliumpalmitat, Natriumoleat, und/oder Kaliummyristat geeignet.

Als Aminosäurederivate mit Tensidwirkung können alkylierte Aminosäuren, wie Alkylglutamate, eingesetzt werden. Beispielsweise ist ein geeignetes Alkylglutamat Dinatriumcocoylglutamat.

Natriumlauriminodiproprionat, Amphoacetate, wie Natriumlauroamphoacetat, Sarkosinate, wie Natriumlauroylsarkosinat, und/oder Betaine, wie Laurylamidopropylbetain, können ebenfalls als Tenside verwendet werden.

Als Glykolether-Tensid können (Poly)oxyethylenverbindungen, wie 2-(2-Butoxyethoxy)ethanol, Polysorbat 20, Polysorbat 40, Polysorbat 60, Polysorbat 61, Polysorbat 65, Polysorbat 80, hydrogeniertes Rhizinusöl (6 bis 60 Ethylenoxid), und/oder Polyoxyethylen, vorzugsweise mit einem Molekulargewicht von 150 bis 6000, eingesetzt werden.

Unter dem Begriff Tenside sind vorzugsweise Stoffe zu verstehen, die als Detergentien eingesetzt werden können und/oder als Netzmittel wirken, welche für eine gleichmäßige Benetzung der Druckplatten sorgen.

Bei einer Ausführungsform des erfindungsgemäßen Feuchtmittels enthält dieses mindestens ein Tensid in einer Konzentration von weniger als 7 Gew.- %, vorzugsweise weniger als 5 Gew.-%, bezogen auf das Gesamtgewicht des Feuchtmittels. Vorzugsweise enthält das erfindungsgemäße Feuchtmittel mindestens ein Tensid in einer Konzentration von 0,00001 bis 5 Gew.-%, weiter bevorzugt, 0,003 bis 2 Gew.-%, bezogen auf das Gesamtgewicht des Feuchtmittels.

Bei einer Ausführungsform des erfindungsgemäßen Feuchtmittels umfasst dieses mindestens einen Puffer. Vorzugsweise ist der Puffer aus der Gruppe, bestehend aus Mono-, Di- und Polycarbonsäuren, Polyhydroxycarbonsäuren, Phosphorsäure, Salpetersäure, Salzsäure und/oder deren Salzen ausgewählt. Beispielsweise kann der Puffer Dinatriumhydrogenphosphat, Natriumdihydrogenphosphat, Kaliumdihydrogenphosphat, Natriumsulfat, Magnesiumnitrat, Zinknitrat, Ammoniumacetat, Natrium- und/oder Kaliumsilikate, Citronensäure, Essigsäure, Äpfelsäure, Maleinsäure, Milchsäure, Ascorbinsäure, Sulfanilsäure, Adipinsäure, 3-Methyladipinsäure, Benzol-1,2-dicarbonsäure, Bernsteinsäure, Aminobernsteinsäure Pimelinsäure, Derivate und/oder Salze davon umfassen.

Besonders geeignete Puffersysteme sind:
Essigsäure/Acetat-Puffer (beispielsweise Ammoniumacetat)
Salpetersäure/Nitrat-Puffer (beispielsweise Zinknitrat und/oder Magnesiumnitrat)
Phosphorsäure/Phosphat-Puffer (beispielsweise Dinatriumhydrogenphosphat)
Dinatriumhydrogenphosphat/Kaliumhydrogenphophat-Puffer
Citronensäure/Natronlauge-Puffer und/oder
Citronensäure/Trinatriumcitrat.

Bei einer Ausführungsform enthält das erfindungsgemäße Feuchtmittel mindestens einen Puffer in einer Konzentration von weniger als 10 Gew.-%, weiter bevorzugt in einer Konzentration von weniger als 8,0 Gew.-%, bezogen auf das Gesamtgewicht des Feuchtmittels. Vorzugsweise enthält das erfindungsgemäße Feuchtmittel einen Puffer in einer Konzentration von 0,1 bis 10 Gew.-%, weiter bevorzugt von 0,5 bis 5,0 Gew.-%, bezogen auf das Gesamtgewicht des Feuchtmittels.

Vorzugsweise weist das erfindungsgemäße Feuchtmittel einen pH-Wert in einem Bereich von 3,5 bis 5,5 auf.

Bei einer Ausführungsform des erfindungsgemäßen Feuchtmittels umfasst dieses mindestens eine schwache organische Säure. Vorzugsweise weisen die schwachen organischen Säuren 2 bis 6 Kohlenstoffatome auf. Bei einer Ausführungsform weist die schwache organische Säure einen pKs-Wert im

Bereich von 2 bis 7, vorzugsweise 2 bis 5,5, auf. Vorzugsweise handelt es sich um eine gesättigte Säure. Vorzugsweise weist die schwache organische Säure eine biozide Wirkung auf. Unter biozider Wirkung ist insbesondere zu verstehen, dass das Wachtum von Bakterien gehemmt wird, die Bildung von Biofilmen gehemmt wird und/oder Biofilme abgebaut werden.

Die schwache organische Säure ist vorzugsweise ausgewählt aus der Gruppe, bestehend aus Sorbinsäure, Propionsäure, Bernsteinsäure (Succinylsäure) Ascorbinsäure, Essigsäure, Ameisensäure, Milchsäure, Brenztraubensäure, Weinsäure, Äpfelsäure, Benzoesäure, Benzylbenzoesäure, Salicylsäure, Hydroxybenzoesäure, Methoxy-Benzoesäure, Methyl-para-Hydroxybenzoesäure, Propyl-para-Hydroxybenzoesäure, Derivate davon, und/oder Mischungen davon. Beispielsweise können die Säuren in Form von Peroxiden vorliegen. Als besonders geeignet hat sich Sorbinsäure, Benzosäure und/oder Essigsäure erwiesen. Als geeignete Derivate der Benzoesäure haben sich 4-Hydroxybenzoesäuremethylester, 4-Hydroxybenzoesäureethylester, 4-Hydroxybenzoesäurepropylester und/oder 4-Hydroxybenzoesäurebutylester erwiesen. Als schwache organische Säuren mit biozider Wrikung sind beispielsweise Sorbinsäure, Kaliumsorbat, Benzoesäure, Natriumbenzoat, Salicylsäure, Natriumsalicylat, Essigsäure und/oder Weinsäure geeignet.

Vorzugsweise enthält das erfindungsgemäße Feuchtmittel die schwache organische Säure in einer Konzentration von weniger als 10 Gew.-%, weiter bevorzugt weniger als 9 Gew.-%, bezogen auf das Gesamtgewicht des Feuchtmittels. Vorzugsweise enthält das erfindungsgemäße Feuchtmittel die schwache organische Säure in einer Konzentration von 0,00001 bis 10 Gew.-% , weiter bevorzugt von 0,001 bis 9 Gew.-%, noch weiter bevorzugt von 0,01 bis 5 Gew.-%, am meisten bevorzugt von 0,1 bis 1 Gew.-%, bezogen auf das Gesamtgewicht des Feuchtmittels.

Darüber hinaus können in dem erfindungsgemäßen Feuchtmittel Entschäumer, beispielsweise Polysiloxane wie Polydimethylsiloxan, Lösungsvermittler, Biozide, Schutzkolloide, Feuchthaltemittel, Chelatbildner, und/oder Korrosionsinhibitoren enthalten sein.

Bei einer Ausführungsform des erfindungsgemäßen Feuchtmittels umfasst dieses mindestens einen Lösungsvermittler, ausgewählt aus einem wasserlöslichen Alkohol und/oder einem Glykolether. Der Lösungsvermittler erhöht vorzugsweise die Löslichkeit der in dem Feuchtmittel enthaltenen Substanzen und/oder dient der Optimierung des Druckprozesses. Bei einer Ausführungsform des erfindungsgemäßen Feuchtmittels ist der Lösungsvermittler ein Alkanol, ein Alkenol, ein Alkandiol oder ein Alkendiol mit 2 - 15 C-Atomen, vorzugsweise mit Hydroxylgruppen in (1,2)- oder (1,3)-Stellung. Vorzugsweise umfasst das erfindungsgemäße Feuchtmittel als Lösungsvermittler Ether und/oder Polyether, vorzugsweise mit 3 - 12 Ethylenoxid- und/oder Propylenoxideinheiten. Beispielsweise umfasst das erfindungsgemäße Feuchtmittel als Lösungsvermittler Methanol, Ethanol, 1-Propanol, Isopropanol, Ethylenglykol, Propylenglykol, insbesondere 1,2-Propylenglykol, 1,3-Propylenglykol, Diethylenglykol, Monomethyletherdipropylenglykol, Ethylenglykolmonobutylether, Diethylenglykolmonobutylether (2-(2-Butoxyethoxy)ethanol), Ethylenglykolmonoisopropylether, 2-Ethyl-1,3-Hexandiol, Butandiol, Hexandiol, Neopenthylglykol, 3,5-Dimethyl-1-hexin-3-ol 3,6-Dimethyl-4-octin-3,6-diol, und/oder 2,4,7,9-Tetramethyl-5-decin-4,7-diol.

Als besonders geeignete Lösungsvermittler haben sich aliphatische, lineare und/oder verzweigte Alkohole, vorzugsweise mit 1 bis 4 Kohlenstoffatomen, weiter bevorzugt mit 2 oder 3 Kohlenstoffatomen, wie Ethanol, 1-Propanol und/oder Isopropanol, erwiesen.

Als besonders geeignete Lösungsvermittler haben sich auch Ether und/oder Glykolether erwiesen, wie beispielsweise Diethylether, 2-Methoxyethanol, 2-Ethoxyethanol, 2-Propoxyethanol, 2-Isopropoxyethanol, 2-Butoxyethanol, 2-(2-Ethoxyethoxy)ethanol, 2-(2-Butoxyethoxy)ethanol, Dimethoxyethan, Diethoxyethan, Dibutoxyethan oder Mischungen davon.

Bei einer Ausführungsform des erfindungsgemäßen Feuchtmittels umfasst dieses mindestens einen Lösungsvermittler in einer Konzentration von weniger als 5 Gew.-%, vorzugsweise in einer Konzentration von weniger als 4,5 Gew.-%. Vorzugsweise umfasst das erfindungsgemäße Feuchtmittel 0,00001 Gew.-% bis 4,5 Gew.-%, weiter bevorzugt 0,001 bis 0,5 Gew.-%, bezogen auf das Gesamtgewicht des Feuchtmittels.

Bei einer Ausführungsform umfasst das erfindungsgemäße Feuchtmittel weniger als 1 Gew.-% organisches umweltschädliches oder giftiges organisches Biozid, vorzugsweise kein organisches umweltschädliches oder giftiges organisches Biozid, bezogen auf das Gesamtgewicht des Feuchtmittels. Unter umweltschädlichen oder giftigen Bioziden sind beispielsweise Dimethoxan, Phenol, Isothiazolinon, Bronopol, Triazol, Benzylalkoholhemiformal, N-Methylochloracetamid, Mecetroniumetilsulfat, Polyhexamethylenbiguanid, Chlorhexidingluconat, Chlorhexidinacetat, Hexetidin, Alkylthiuroniumverbindungen, Benzylalkohol, Phenoxyethanol, Phenoxypropanol, Ethylhexylglycerin, Undecylsäure, 2-Biphenol, Triclosan und/oder p-Chlor-m-Xylenol zu verstehen.

Als Schutzkolloide, die insbesondere als Filmbildner wirken, können Kollagen, insbesondere natives Kollagen, Elastin, Gummi Arabicum, Glycerin, Carboxymethylcellulose, Hydroxyethylcellulose, Methylcellulose, Carboxystärke, Styrol-Maleinsäureanhydrid-Copolymere, Polyvinylpyrrolidon, Pyrrolidon, Polyglykole, Polysaccharide, Tragantgummi, Natriumalginat, Polyacrylamid und/oder mehrwertige Alkohole eingesetzt werden. Diese Stoffe können die Druckplatten vor mechanischer Beanspruchung schützen.

Bei einer Ausführungsform des erfindungsgemäßen Feuchtmittels umfasst dieses mindestens ein Schutzkolloid in einer Konzentration von 0,01 Gew.-% bis 20 Gew.-%, weiter bevorzugt 0,1 Gew.-% bis 15 Gew.-%, bezogen auf das Gesamtgewicht des Feuchtmittels.

Als Feuchthaltemittel können Glykole, Glycerin, Sorbit, Hexit und/oder Polyalkohole, insbesondere Polyglykole, eingesetzt werden. Die Feuchtmittel bewirken vorzugsweise eine gleichmäßige Befeuchtung der Druckplatten.

Bei den Chelatbildnern, die insbesondere als Enthärtungsmittel wirken, handelt es sich vorzugsweise um Verbindungen mit ein- bis zu mehrzähnigen Liganden. Bei den Chelatbildnern kann es sich beispielsweise um Ethylendiamintetraacetat (EDTA), 1-Hydroxyethan-(1,1-diphosphonsäure) (HEDP), Citronensäure, Glycin, Salicylsäure, Asparaginsäure, Glutaminsäure, Malonsäure, Oxalsäure, Bernsteinsäure, Picolinsäure, Phthalsäure, Dipicolinsäure, Aminophosphat, deren Salze, EDTA, oder Mischungen davon handeln.

Als Korrosionsinhibitoren können Ammoniumbichromit, Magnesiumnitrat, organische Zinksalze, wie bspw. Zinkgluconat und/oder Zinkglucoheptonat, wasserlösliche, anorganische Polyphosphate, wie bspw. Kaliumnitritpolyphosphat, Phenylarsonsäure, Propalgylverbindungen, Thioharnstoff, 1 H-Benzotriazol, Benzimidazole, Kupfer- und/oder Silikationen wie bspw. Kupfernitrat, Natriumsilikat, wasserlösliche Molybdänverbindungen, wie bspw. Natriummolybdat, Natriumdimolybdat und/oder Ammoniummolybdat und/oder Borverbindungen, wie bspw. Borsäure, Metaborsäure, Polyborsäure eingesetzt werden.

Einige der in dem erfindungsgemäßen Feuchtmittel enthaltenen Stoffe sind aufgrund verschiedener Eigenschaften mehreren in dem Feuchtmittel enthaltenen Stoffgruppen zuzuordnen. So kann beispielsweise Glycerin als Schutzkolloid und/oder als Feuchthaltemittel eingesetzt werden. Gleiches gilt auch für andere Stoffe.

Durch den Zusatz von Feuchtmittel zu Wasser wird Feuchtwasser erhalten, welches vorzugsweise im Feuchtwasserkreislauf von Druckanlagen zum Einsatz gelangt. Das Feuchtwasser bzw. das Feuchtmittel kann im Feuchtwasserkreislauf von Druckanlagen beispielsweise für Coldset-Druck (Zeitungsdruck), Rollen-Offset und/oder Bogen-Offset eingesetzt werden.

Das Feuchtmittel kann in Druckprozesses dem Feuchtwasser zugesetzt werden. Der Zusatz des Feuchtmittels verhindert vorzugsweise das Wachstum von Bakterien, reduziert die Zahl der Bakterien im zirkulierenden Feuchtwasser, verhindert die Neubildung von Biofilmen und/oder bewirkt vorzugsweise sogar den Abbau von bestehenden Biofilmen im Feuchtwasserkreislauf.

Vorzugsweise umfasst das Feuchtwasser das Feuchtmittel in einer Konzentration von 1 bis 5 Gew.-%, bezogen auf das Gesamtgewicht des Feuchtwassers.

Bei einer besonders bevorzugten Ausführungsform des erfindungsgemäßen Feuchtmittels umfasst dieses:
mindestens eine Peroxidverbindung, vorzugsweise Wasserstoffperoxid, mindestens ein Tensid, ausgewählt aus der Gruppe, bestehend aus quaternären Ammoniumverbindungen, Alkylglukosiden, und/oder Polyether mit 3 - 12 Ethylenoxid-und/oder Propylenoxideinheiten, mindestens einen Lebensmittelkonservierungsstoff, ausgewählt aus der Gruppe, bestehend aus Essigsäure, Sorbinsäure, Benzoesäure, Derivate davon, Salze davon und/oder Mischungen davon, und ggf. Glykole und/oder Glykolether.

Das erfindungsgemäße Feuchtmittel weist überraschenderweise biozide Eigenschaften im Hinblick auf den Feuchtwasserkreislauf auf. Das erfindungsgemäße Feuchtmittel kann sowohl zur Desinfektion von Druckanlagen vor deren Betrieb, beispielsweise im Rahmen einer Sanierung, eingesetzt werden. Ferner kann das erfindungsgemäße Feuchtmittel kontinuierlich oder diskontinuierlich dem Feuchtwasser während des Druckprozesses zugesetzt werden. Bei herkömmlichen Feuchtmitteln ist zwar der Einsatz von Bioziden bekannt. Durch diese wird eine Konservierung des Feuchtmittels erzielt, jedoch häufig eine nicht ausreichende Desinfektion des Feuchtwasserkreislaufs. Zudem sind diese Biozide nicht in der Lage, Biofilme wirksam zu entfernen oder ihrer Entstehung vorzubeugen. Das erfindungsgemäße Feuchtmittel weist vorzugsweise diese Eigenschaften auf.

Die vorliegende Erfindung betrifft ferner ein Desinfektionsmittel zur Verwendung in Feuchtmitteln oder als Feuchtmittel im Feuchtwasser in Druckanlagen, wobei das Desinfektionsmittel eine Peroxidverbindung enthält. Insbesondere entspricht das Desinfektionsmittel dem vorher beschriebenen Feuchtmittel, wobei das Desinfektionsmittel eine 1-fach bis 25-fach, vorzugsweise 1- bis 15-fach höhere Konzentration, als das erfindungsgemäße Feuchtmittel aufweist. Ferner kann das Desinfektionsmittel auch ohne Puffer, ohne Lösungsvermittler, ohne Schutzkolloid, ohne Feuchthaltemittel, ohne Chelatbildner und/oder ohne Korrosionsinhibitoren eingesetzt werden. In diesem Fall wird das erfindungsgemäße Desinfektionsmittel vorzugsweise mit einem herkömmlichen Feuchtmittel kombiniert. Das erfindungsgemäße Feuchtmittel kann auch ohne herkömmliches Feuchtmittel eingesetzt werden. Zur Verdünnung des Feuchtmittels kann Wasser eingesetzt werden. Da das Desinfektionsmittel ggf. höher konzentriert ist, wird es vorzugsweise beim Einsatz als Feuchtmittel gar nicht oder bis zu 25- fach, vorzugsweise mit Wasser, verdünnt. Bei Einsatz des Desinfektionsmittels direkt im Feuchtwasser erfolgt die Zudosierung des Desinfektionsmittels vorzugsweise in einer Konzentration von 0,005 Gew.-% bis 5 Gew.-%, vorzugsweise von 0,05 bis 0,5 Gew.-%, bezogen auf das Gesamtgewicht des Feuchtwassers.

### Figuren

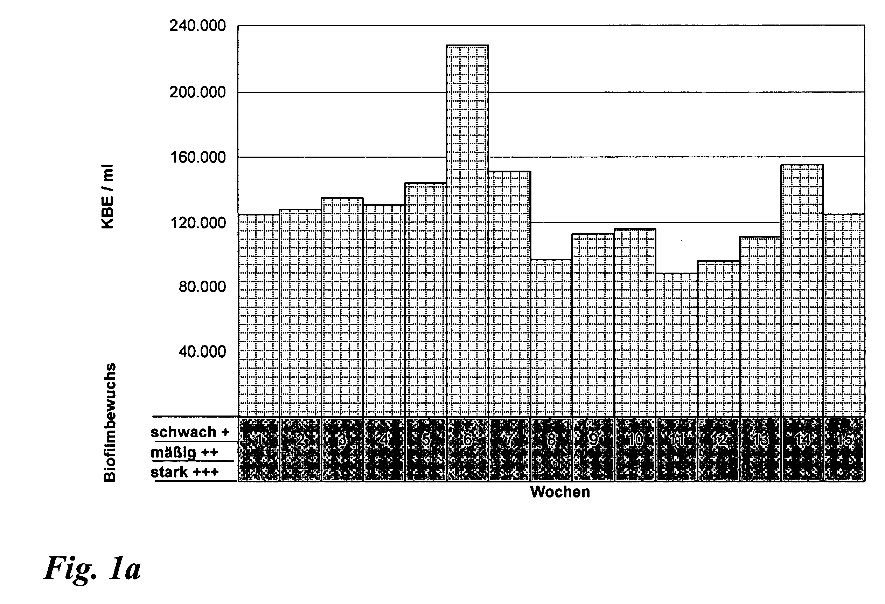

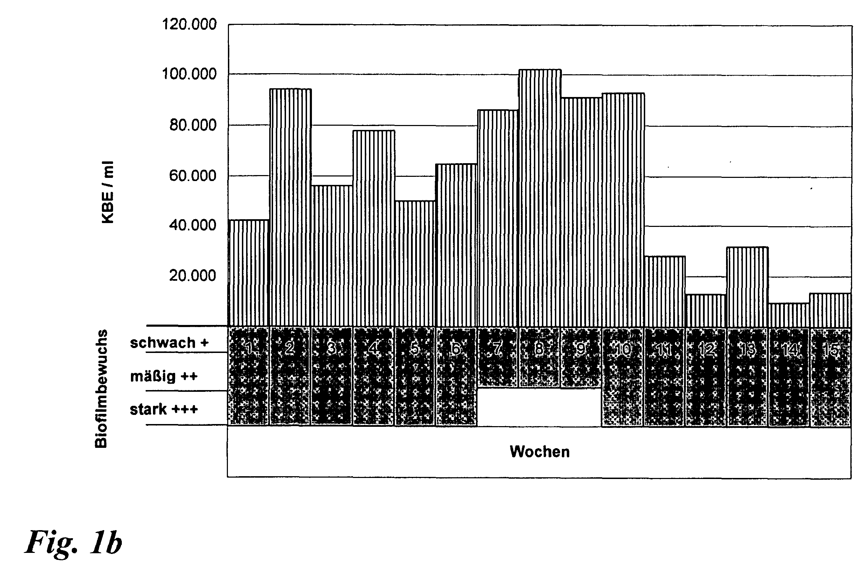

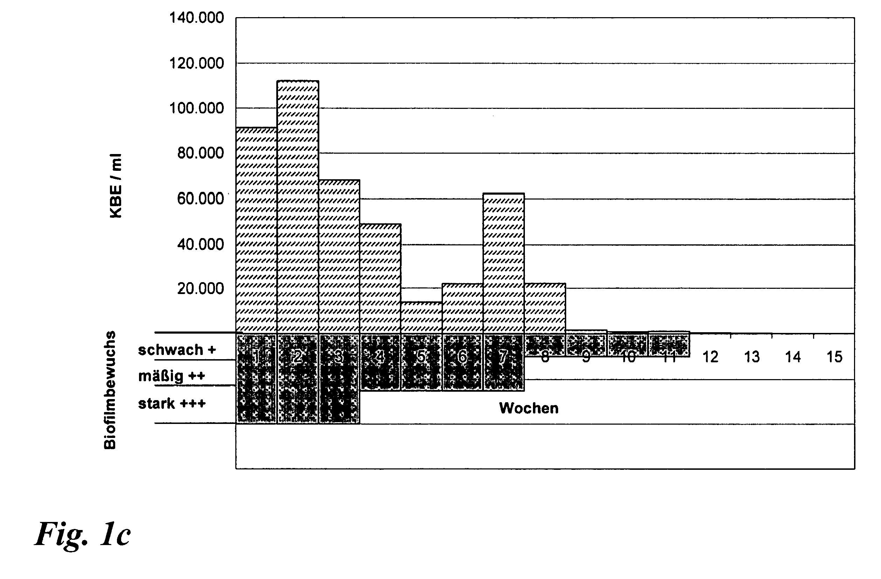

Figur 1 zeigt den Verlauf eines Laborversuches (Beispiel 5) , in welchem der BiofilmBewuchs von Silikonschläuchen sowie die Zahl der Kolonienbildenden Einheiten (vorwiegend Bakterien)/ ml Feuchtwasser über einen Zeitraum von 1 bis 15 Wochen gemessen wurde. Figur 1 a zeigt das Ergebnis bei Verwendung von reinem Wasser als Feuchtwasser. Figur 1b zeigt die das Ergebnis bei Verwendung von Wasser, welchem ein herkömmliches Feuchtmittel zugesetzt wurde, als Feuchtwasser. Figur 1c zeigt das Ergebnis bei Verwendung von Wasser, welchem das erfindungsgemäße Feuchtmittel zugesetzt wurde, als Feuchtwasser.

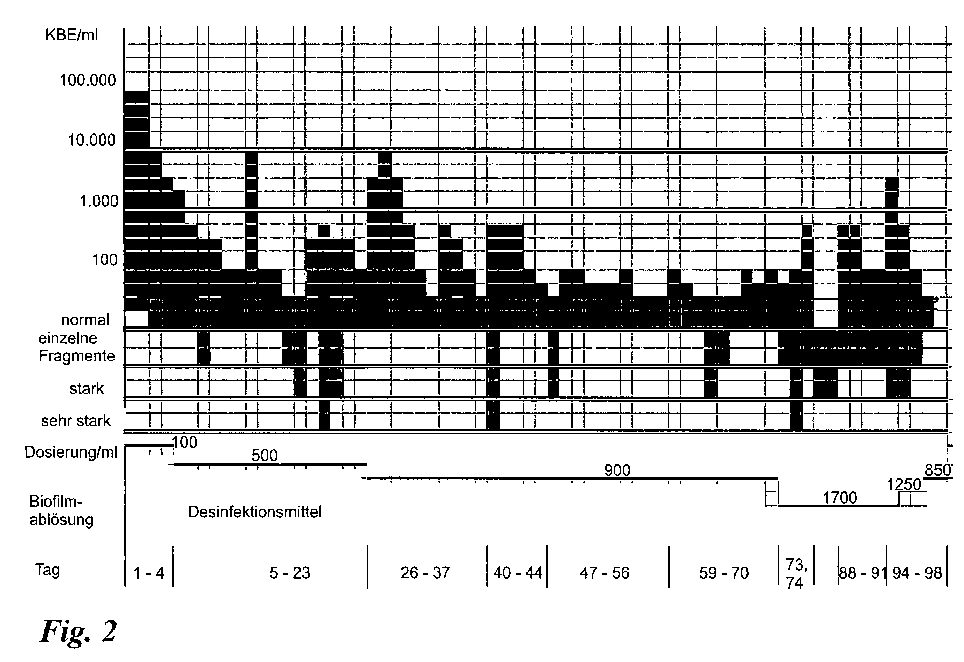

Figur 2 zeigt den Verlauf eines Versuches (Beispiel 6) im Feuchtwasserkreislauf einer Offset-Druckanlage, in welchem der Bewuchs in dem Kreislaufsystem sowie die Zahl der Kolonienbildenden Einheiten/ ml Feuchtwasser über einen Zeitraum von ca. 3 Monaten gemessen wurde. Hierbei wurde die Einwirkzeit in Tagen sowie die Dosierung auf der x-Achse gegen die Zahl der Kolonienbildenden Einheiten (vorwiegend Bakterien)/ ml Feuchtwasser als dunkelgraue Balken (y-Achse) aufgetragen. Für die Zahl der kolonienbildenden Einheiten wurde eine logarithmische Darstellung gewählt. Ferner wurde die Einwirkzeit in Tagen sowie die Dosierung auf der x-Achse gegen Beschaffenheit des Biofilms als hellgraue Balken (y-Achse) aufgetragen.

Die nachfolgenden Beispiele sollen die vorliegende Erfindung näher erläutern, aber in keiner Weise beschränken.

### Beispiel 1

Desinfektionsmittel für Feuchtwasser von Druckanlagen
4, 9 Gew.-% Wasserstoffperoxid,
1,8 Gew.-% Natriumbenzoat,
0,15 Gew.-% Sorbinsäure,
0,015 Gew.-% Octylglucosid/Decylglucosid,
0,02 bis 0,6 Gew.-% ethoxylierte quaternäre Ammoniumverbindung,
0,02 bis 0,6 Gew.-% 2-(2-Butoxyethoxy)ethanol und/oder
0,02 bis 0,6 Gew.-% Glykol,
bezogen auf das Gesamtgewicht des Desinfektionmittels, welches auf der Basis von Wasser hergestellt ist.

Das Desinfektionsmittel kann in einer Konzentration von 4 bis 100 Gew.-%, vorzugsweise 4 bis 20 Gew.-%, als Feuchtmittel in Druckanlagen eingesetzt werden, bezogen auf das Gesamtgewicht des Feuchtmittels.

### Beispiel 2

Desinfektionsmittel für Feuchtwasser von Druckanlagen
4, 9 Gew.-% Wasserstoffperoxid,
0,2 bis 0,5 Gew.-% Essigsäure,
0,05 bis 0,15 Gew.-% Peressigsäure,
0015 Gew.-% Octylglucosid/Decylglucosid,
0,02 bis 0,6 Gew.-% ethoxylierte quaternäre Ammoniumverbindung,
0,02 bis 0,6 Gew.-% 2-(2-Butoxyethoxy)ethanol,
0,02 bis 0,6 Gew.-% Glykol, und/oder
0,5 Gew.-% Ethanol,
bezogen auf das Gesamtgewicht des Desinfektionsmittels, welches auf der Basis von Wasser hergestellt ist.

Das Desinfektionsmittel kann in einer Konzentration von 4 bis 100 Gew.-%, vorzugsweise 4 bis 20 Gew.-%, als Feuchtmittel eingesetzt werden, bezogen auf das Gesamtgewicht des Feuchtmittels.

### Beispiel 3

Feuchtmittel für Druckanlagen
0,2 bis 1,0 Gew.-% Wasserstoffperoxid,
0,07 bis 0,36 Gew.-% Natriumbenzoat,
0,006 bis 0,15 Gew.-% Sorbinsäure,
0,0006 bis 0,003 Gew.-% Octylglucosid/Decylglucosid,
0,0008 bis 0,12 Gew.-% quaternäre Ammoniumverbindung,
0,0008 bis 0,12 Gew.-% 2-(2-Butoxyethoxy)ethanol und/oder
0,0008 bis 0,12 Gew.-% Glykol,
4 bis 8,5 Gew.-% Citronensäure/ 1,3 bis 3,1 Gew.-% Natriumhydroxid,
1,2 Gew.-% Gummi arabicum, und
17 Gew.-% Glycerin,
bezogen auf das Gesamtgewicht des Feuchtmittels, welches auf der Basis von Wasser hergestellt ist.

Das Feuchtmittel kann in einer Konzentration von 1 bis 5 Gew.-% als Feuchtwasser eingesetzt werden, bezogen auf das Gesamtgewicht des Feuchtwassers. Die Verdünnung erfolgt mit Wasser.

### Beispiel 4

Feuchtmittel für Druckanlagen
0,2 bis 1,0 Gew.-% Wasserstoffperoxid,
0,008 bis 0,5 Gew.-% Essigsäure,
0,002 bis 0,03 Gew.-% Peressigsäure,
0,0006 bis 0,003 Gew.-% Octylglucosid/Decylglucosid,
0,0008 bis 0,12 Gew.-% quaternäre Ammoniumverbindung,
0,0008 bis 0,12 Gew.-% 2-(2-Butoxyethoxy)ethanol,
0,0008 bis 0,12 Gew.-% Glykol,
0,01 bis 0,5 Gew.-% Ethanol,
4 bis 8,5 Gew.-% Citronensäure/ 1,3 bis 3,1 Gew.-% Natriumhydroxid,
1,2 Gew.-% Gummi arabicum, und
17 Gew.-% Glycerin,
bezogen auf das Gesamtgewicht des Feuchtmittels, welches auf der Basis von Wasser hergestellt ist.

Das Feuchtmittel kann in einer Konzentration von 1 bis 5 Gew.-% als Feuchtwasser eingesetzt werden, bezogen auf das Gesamtgewicht des Feuchtwassers. Die Verdünnung erfolgt mit Wasser.

### Beispiel 5

| | |
|---|---|
| Probenmaterial: | Silikonschläuche (d (Durchmesser) = 10 mm) mit 9 Monate altem Biofilmbelag |
| Behandlungsdauer: | 15 Wochen |
| Spüllösung (40 I): | Probe 1: Wasser Probe 2: Wasser + 2 % Feuchtmittel Probe 3: Wasser + 2 % erfindungsgemäßes Feuchtmittel gegen Biofilmbewuchs |

Das in Probe 3 eingesetzte Feuchtmittel entsprach dem Feuchtmittel aus Beispiel 3. Das in Probe 2 eingesetzte Feuchtmittel entsprach dem Feuchtmittel aus Beispiel 3, jedoch ohne Wasserstoffperoxid, Natriumbenzoat, Sorbinsäure und quarternäre Ammoniumverbindung.

### Durchführung:

Die Silikonschläuche wurden mit 40 Liter der jeweiligen Spüllösung (Probe 1 - 3) 5 Tage pro Woche im Kreislauf durchspült. Die Spüllösungen wurden jeweils nach 24 Stunden komplett ausgetauscht. Nach 5 Tagen wurden die Pumpen der Anlage für 2 Tage abgestellt.
Jede Woche wurde eine visuelle Prüfung des Biofilmzustandes durchgeführt. Der Belag in den Silikonschläuchen wurde mit dem Biofilmbelag zu Beginn des Versuchs und nach verschiedenen Einwirkzeiten begutachtet und verglichen. Der zeitliche Verlauf ist in Tabelle 1 sowie im unteren Teil der Figuren 1a) bis 1c) dargestellt.

| | | |
|---|---|---|
| Beurteilungskriterien: | +++ | starker Biofilmanwuchs |
| | ++ | mäßiger Biofilmanwuchs |
| | + | leichter Biofilmanwuchs |
| | - | kein Biofilmbewuchs |

**Tabelle 1**

| **Einwirkzeit** **(Wochen)** | **probe 1** | **probe 2** | **probe 3** |
|---|---|---|---|
| 1 | +++ | +++ | +++ |
| 2 | +++ | +++ | +++ |
| 3 | +++ | +++ | +++ |
| 4 | +++ | +++ | ++ |
| 5 | +++ | +++ | ++ |
| 6 | +++ | ++ | ++ |
| 7 | +++ | ++ | + |
| 8 | +++ | ++ | + |
| 9 | +++ | +++ | + |
| 10 | +++ | +++ | + |
| 11 | +++ | +++ | + |
| 12 | +++ | +++ | - |
| 13 | +++ | +++ | - |
| 14 | +++ | +++ | - |
| 15 | +++ | +++ | - |

Des Weiteren wurden die Keimzahlen im Spülwasser zu Beginn und nach 24 Stunden Zirkulation stichprobenartig einmal pro Woche bestimmt. Die Gesamtkeimzahl der Bakterien, ausgedrückt in Kolonie bildenden Einheiten/ml, wurde mit Compact Dry Kulturplatten der Firma HyServe, Uffing bei München, von 1 ml Probenvolumen, erforderlichenfalls nach Zwischenverdünnung, ermittelt. Die Inkubation erfolgte für 2 Tage bei 35 °C. Der zeitliche Verlauf ist in Tabelle 2 sowie im oberen Teil der Figuren 1a) bis 1c) dargestellt.

**Tabelle 2**

| | **Probe** | **KBE / ml** | | |
|---|---|---|---|---|
| | | **Probe 1** | **Probe 2** | **Probe 3** |
| 1 | Zu Beginn - frische Spüllösung | 10 | 3 | 5 |
| | Nach 24 Stunden Spülung | 125.000 | 42.000 | 91.000 |
| 2 | Zu Beginn - frische Spüllösung | 5 | 3 | 5 |
| | Nach 24 Stunden Spülung | 128.000 | 94.000 | 112.000 |
| 3 | Zu Beginn - frische Spüllösung | 8 | 7 | 10 |
| | Nach 24 Stunden Spülung | 135.000 | 56.000 | 68.000 |
| 4 | Zu Beginn - frische Spüllösung | 7 | 3 | 6 |
| | Nach 24 Stunden Spülung | 131.000 | 78.000 | 49.000 |
| 5 | Zu Beginn - frische Spüllösung | 15 | 7 | 4 |
| | Nach 24 Stunden Spülung | 144.000 | 50.000 | 14.000 |
| 6 | Zu Beginn - frische Spüllösung | 2 | 4 | 4 |
| | Nach 24 Stunden Spülung | 228.000 | 65.000 | 22.000 |
| 7 | Zu Beginn - frische Spüllösung | 2 | 3 | 8 |
| | Nach 24 Stunden Spülung | 151.000 | 86.000 | 62.200 |
| 8 | Zu Beginn - frische Spüllösung | 3 | 8 | 1 |
| | Nach 24 Stunden Spülung | 97.000 | 102.000 | 22.100 |
| 9 | Zu Beginn - frische Spüllösung | 5 | 5 | 8 |
| | Nach 24 Stunden Spülung | 113.000 | 91.000 | 1.500 |
| 10 | Zu Beginn - frische Spüllösung | 8 | 2 | 4 |
| | Nach 24 Stunden Spülung | 116.000 | 92.800 | 800 |
| 11 | Zu Beginn - frische Spüllösung | 3 | 1 | 5 |
| | Nach 24 Stunden Spülung | 88.000 | 28.000 | 1.000 |
| 12 | Zu Beginn - frische Spüllösung | 12 | 5 | 3 |
| | Nach 24 Stunden Spülung | 96.000 | 13.000 | 250 |
| 13 | Zu Beginn - frische Spüllösung | 4 | 2 | 0 |
| | Nach 24 Stunden Spülung | 111.000 | 31.700 | 72 |
| 14 | Zu Beginn - frische Spüllösung | 3 | 3 | 3 |
| | Nach 24 Stunden Spülung | 155.000 | 9.700 | 12 |
| 15 | Zu Beginn - frische Spüllösung | 3 | 3 | 3 |
| | Nach 24 Stunden Spülung | 125.000 | 13.600 | 15 |

### Beispiel 6

Vor Beginn des Tests war eine Offsetdruckmaschine, wie sie für den Zeitungsdruck verwendet wird, zwei Wochen in Betrieb, ohne Zusatz eines Desinfektionsmittels zum Feuchtwasser. Dem Feuchtwasser wurde jedoch ein handelsübliches Feuchtmittel (Schwego® Soft 2000 W von der Firma Schwegmann GmbH Co. KG, Wernher-von-Braun-Str. 14, D-53501 Grafschaft-Gelsdorf) in einer Konzentration von 2 bis 4 Gew.-%, bezogen auf das Gesamtgewicht des Feuchtwassers zugegeben. Danach wurde zusätzlich das erfindungsgemäße Desinfektionmittel in den Frischwasserzulauf zudosiert. Die Dosierung erfolgte manuell oder mit Dosierpumpe, entsprechend dem Volumen des Frischwasserzulaufs oder abhängig vom pH-Wert im Feuchtwasserkreislauf. Die Dosierung erfolgte zunächst durch Zugabe von unterschiedlichen Mengen (Volumen an Desinfektionsmittel Menge von 100 ml entsprach einer Konzentration von jeweils 0,02 Gew.-% Desinfektionsmittel gemäß Beispiel 2, bezogen auf das Gesamtgewicht des zirkulierenden Feuchtwassers).

Die Keimzahl im Feuchtwasser, ausgedrückt in Kolonie bildenden Einheiten (KBE)/ml, wurde 3 Monate lang (mit 2 Wochen Unterbrechung) im Abstand von 1 bis 4 Tagen bestimmt. Hierzu wurde ein Standardtest für Bakterien bzw. Schimmelpilze und Hefen verwendet (Heipha Dip Slides GK-T/HS, 3 - 5 Tage Inkubation bei 30 °C).

Die Ablösung der Biofilme, die von der Filtermatte im Kühlbecken des Feuchtwasserkreislaufs zurückgehalten wurden, wurde in vier Stufen wiedergegeben: normal, einzelne Fragmente, stark, sehr stark.

In der Figur 2 ist im Zeitraum der Zudosierung des Desinfektionsmittels eine langsame Ablösung der vorhandenen Biofilme zu erkennen, die mit einer anhaltenden Reduktion der Gesamtkeimzahl von Bakterien im Feuchtwasser von mehr als 10⁵ KBE/ml um im Mittel 3 logarithmische Einheiten, mindestens jedoch 1,5 logarithmische Einheiten bei jeder Messung in Folge einherging. Zugleich verschwand im Verlauf weniger Tage die Trübung und ein auffallender Geruch des Feuchtwassers. Eine Erhöhung der Dosierung des Desinfektionsmittels hatte erneut eine vermehrte Ablösung von Fragmenten alten Biofilms zur Folge. Die Feuchtwasserdüsen des Feuchtwasserkreislaufes wurden während der kontinuierlichen Ablösung alter Biofilmablagerungen nicht verlegt. Bei der Inspektion wurde festgestellt, dass keine Neubildung von Biofilmen mehr erfolgte. Daher können mit zunehmender Behandlungszeit die Intervalle zwischen den routinemäßigen Grundreinigungen der Feuchtwasser-systeme vergrößert werden und auch die Dosierung verringert werden.

## Patentansprüche

1. Feuchtmittel, umfassend:
mindestens eine Peroxidverbindung.

2. Feuchtmittel nach Anspruch 1,
wobei die Peroxidverbindung aus der Gruppe, bestehend aus Alkaliperoxiden, Erdalkaliperoxiden, Wasserstoffperoxid, Peroxysäuren, Perboraten, Persilikaten, Persulfaten, Perphosphaten, Percarbonaten und/oder Mischungen davon ausgewählt ist.

3. Feuchtmittel nach Anspruch 1 oder 2,
wobei die mindestens eine Peroxidverbindung in einer Konzentration von weniger als 1,5 Gew. %, bezogen auf das Gesamtgewicht des Feuchtmittels, enthalten ist.

4. Feuchtmittel nach einem der vorhergehenden Ansprüche, umfassend mindestens ein Tensid, ausgewählt aus der Gruppe, bestehend aus kationischen, anionischen, nichtionischen und/oder amphoteren Tensiden.

5. Feuchtmittel nach Anspruch 4, umfassend mindestens ein Tensid, ausgewählt aus der Gruppe, bestehend aus Alkylglucosiden, quarternären Ammoniumverbindungen, Ethylenoxid-Polymeren, Propylenoxid-Polymeren, Ethylenoxid/Propylenoxid-Copolymeren, Fettsäureethoxylaten, Fettalkoholethoxylaten, Siloxanalkoxylaten, und/oder Mischungen davon.

6. Feuchtmittel nach einem der vorhergehenden Ansprüche, enthaltend mindestens ein Tensid in einer Konzentration von weniger als 7 Gew.- %, bezogen auf das Gesamtgewicht des Feuchtmittels.

7. Feuchtmittel nach einem der vorhergehenden Ansprüche, umfassend
mindestens eine schwache organische Säure, ausgewählt aus der Gruppe, bestehend aus Sorbinsäure, Propionsäure, Bernsteinsäure, Ascorbinsäure, Essigsäure, Ameisensäure, Milchsäure, Brenztraubensäure, Weinsäure, Äpfelsäure, Benzoesäure, Benzylbenzoesäure, Salicylsäure, Hydroxybenzoesäure, Methoxy-Benzoesäure, Methyl-para-Hydroxybenzoesäure, Propyl-para-Hydroxybenzoesäure, Derivate davon, und/oder Mischungen davon.

8. Feuchtmittel nach einem der vorhergehenden Ansprüche, umfassend mindestens einen Lösungsvermittler, ausgewählt aus einem wasserlöslichen Alkohol und/oder einem Glykolether.

9. Feuchtmittel nach einem der vorhergehenden Ansprüche, umfassend mindestens einen Puffer.

10. Feuchtmittel nach einem der vorhergehenden Ansprüche, umfassend kein organisches Biozid, ausgewählt aus der Gruppe, bestehend aus Dimethoxan, Phenol, Isothiazolinon, Bronopol, Triazol, Benzylalkoholhemiformal, N-Methylochloracetamid, Mecetroniumetilsulfat, Polyhexamethylenbiguanid, Chlorhexidingluconat, Chlorhexidinacetat, Hexetidin, Alkylthiuroniumverbindungen, Benzylalkohol, Phenoxyethanol, Phenoxypropanol, Ethylhexylglycerin, Undecylsäure, 2-Biphenol, Triclosan p-Chlor-m-Xylenol, Derivaten davon und Mischungen davon.

11. Feuchtwasser, umfassend ein Feuchtmittel nach einem der Ansprüche 1 bis 10.

12. Feuchtwasser nach Anspruch 11, umfassend das Feuchtmittel in einer Konzentration von 1 bis 5 Gew.-%, bezogen auf das Gesamtgewicht des Feuchtwassers.

13. Verwendung des Feuchtmittels nach einem der vorhergehenden Ansprüche 1 bis 10 in Feuchtwasser oder des Feuchtwasser nach Anspruch 11 oder 12 in Druckanlagen.

14. Verwendung eines Desinfektionsmittels in Feuchtmitteln oder als Feuchtmittel im Feuchtwasser in Druckanlagen, wobei das Desinfektionsmittel eine Peroxidverbindung enthält.

15. Verwendung eines Desinfektionsmittels nach Anspruch 14, wobei das Desinfektionsmittel das Feuchtmittel nach einem der Ansprüche 1 bis 10 ist und wobei das Desinfektionsmittel eine 1-fach bis 25-fach höhere Konzentration als das Feuchtmittel nach einem der Ansprüche 1 bis 10 aufweist.
